# DEMANDE DE BREVET EUROPEEN

(11) **EP 1 060 927 A1**
(43) Date de publication de la demande: **20.12.2000**
(21) Numéro de dépôt: 00401563.2
(22) Date de dépôt: 02.06.2000
(51) Int. Cl.: B60J 10/00, B60J 10/08

(54) **Nouveau profilé à section en U, en élastomère ou plastomère, et procédé de fixation de ce profilé sur une feuillure**

(30) Priorité: 15.06.1999 FR 9907537
(71) Demandeur: BTR SEALING SYSTEMS FRANCE, 92000 Nanterre (FR)
(72) Inventeur: Hardy, Francis, 76520 Boos (FR)
(74) Mandataire: Jolly, Jean-Pierre

(57) **Abrégé**

Ce profilé à section en U, à la base ou à une aile latérale duquel est éventuellement attenant un organe d'étanchéité (2), est destiné à coiffer une feuillure (6) et à en être rendu solidaire.

Selon l'invention, ce profilé est dépourvu d'une armature rigide à section en U et au moins un cordon continu d'un matériau adhésif (4) rapporté à l'intérieur du profilé (1) adhère à la surface interne de la base de celui-ci et/ou éventuellement d'au moins une de ses ailes latérales, tandis que, dans l'élastomère ou le plastomère constituant le profilé ou dans le cordon de matériau adhésif est noyé au moins un conducteur électrique (5) apte à être connecté à ses extrémités à une source de courant électrique en vue de chauffer le matériau adhésif.

## Description

La présente invention concerne un nouveau profilé à section transversale en U, en élastomère ou en plastomère. L'invention a également pour objet un procédé de fixation d'un tel profilé sur une feuillure, notamment d'une carrosserie d'automobile.

Dans la suite de la présente description, c'est à de tels profilés à section en U utilisés dans l'industrie automobile que l'on se réfèrera plus particulièrement, mais l'invention n'est naturellement pas limitée à une telle application.

On sait que les profilés destinés à assurer l'étanchéité d'ouvrants tels que des portes, des vitres, un coffre etc... d'un véhicule automobile, dans la position de fermeture de cet ouvrant, comprennent généralement deux parties solidaires l'une de l'autre :
- une partie à section en U, en un élastomère ou en plastomère, destinée à coiffer en la pinçant une feuillure ou un bord saillant de l'encadrement de l'ouverture correspondante de la carrosserie,
- une partie tubulaire d'étanchéité, généralement en un matériau cellulaire, attenante extérieurement à la base ou à une aile latérale de la partie à section en U et destinée à être comprimée entre l'ouvrant et la feuillure ou le bord saillant de l'encadrement.

La partie tubulaire et la partie à section en U formant pince peuvent être coextrudées. Elles peuvent aussi être réalisées séparément par extrusion et assemblées par collage, par exemple.

Une ou des lèvres font généralement saillie à partir d'au moins une aile latérale de la partie formant pince en direction de l'autre aile. Ces lèvres peuvent être en le même matériau que le reste de cette partie ou en un matériau différent.

La partie formant pince comporte habituellement une armature métallique, également à section en U, noyée partiellement ou totalement dans l'élastomère ou le plastomère dont est constituée cette partie. Cette armature est destinée à conférer à cette partie une rigidité satisfaisante, tout en lui laissant une souplesse suffisante pour qu'elle puisse épouser la forme de l'encadrement, même dans les portions d'angle, à forte courbure, de celui-ci.

La mise en place de ces profilés armés à section en U sur l'encadrement d'une ouverture associée à un ouvrant est cependant une opération complexe, nécessitant un effort d'insertion important sur la feuillure ou le bord saillant de l'encadrement, si elle est effectuée manuellement.

Pour mettre en place un tel profilé armé à section en U, on peut aussi utiliser un maillet à tête vibrante, comme décrit dans EP 0 451 023.

On peut enfin utiliser la technique dit du "roll forming", qui implique un écartement préalable des branches du U, avant la mise en place du profilé sur une feuillure ou un bord saillant de l'encadrement qu'il équipe, puis un rapprochement de ces branches pour pincer cette feuillure ou ce bord saillant.

La présente invention vise à proposer un nouveau type de profilé à section en U, qui puisse être rendu solidaire de la feuillure qu'il coiffe par une technique originale, plus facile à mettre en oeuvre que celles que l'on vient d'évoquer.

L'invention vise également à proposer un procédé de fixation sur une feuillure de ce profilé à section en U, qui ne nécessite aucun effort manuel important des opérateurs, ni le recours à des dispositifs complexes d'un type connu.

A cet effet, l'invention a pour objet un profilé à section en U, à la base ou à une aile latérale duquel est éventuellement attenant un organe d'étanchéité, ce profilé étant destiné à coiffer une feuillure et à en être rendu solidaire, ce profilé étant caractérisé en ce qu'il est dépourvu d'une armature rigide à section en U, en ce qu'au moins un cordon continu d'un matériau adhésif rapporté à l'intérieur du profilé adhère à la surface interne de la base de celui-ci et/ou éventuellement d'au moins une de ses ailes latérale, et en ce que, dans l'élastomère ou le plastomère constituant le profilé ou dans le cordon de matériau adhésif est noyé au moins un conducteur électrique apte à être connecté à ses extrémités à une source de courant électrique en vue de chauffer le matériau adhésif.

Cet adhésif peut être une colle, par exemple du type dit "hot melt", que l'on applique à chaud sous forme liquide ou pâteuse à l'aide d'une filière alimentée par une pompe, par exemple lors de la fabrication par extrusion du profilé, et qu'on laisse ensuite durcir par simple refroidissement. Lorsque l'on fait passer du courant électrique dans le ou les conducteurs dont est équipé le profilé, après mise en place de celui-ci sur la feuillure qu'il est destiné à équiper, l'adhésif ainsi chauffé ramollit rapidement sous l'effet de la chaleur, pour se répandre entre la feuillure et le profilé qui la coiffe et pour se resolidifier ensuite tout aussi rapidement, lorsqu'il n'est plus chauffé, en solidifiant ainsi la feuillure et le profilé qui la coiffe.

Comme adhésif, on peut également utiliser un mastic-colle, qui est pâteux, lorsque l'on place le profilé en position sur la feuillure qu'il est appelé à équiper, et qui durcit ensuite par polymérisation, sous l'effet de la chaleur produite par le ou les conducteurs électriques, lorsque celui-ci ou ceux-ci sont alimentés en courant électrique.

Le ou les conducteurs électriques peuvent se présenter sous forme de feuillards ou de fils métalliques et ils peuvent agir sur l'adhésif aussi bien comme résistances chauffantes que par induction.

On notera que la chaleur ainsi produite peut en outre avoir un effet vulcanisant sur le plastomère ou l'élastomère du profilé.

Le profilé étant dépourvu d'armature métallique, il est beaucoup plus léger que les profilés utilisés dans le même but dans la technique antérieure.

Afin que, malgré cette absence d'armature, le profilé se maintienne correctement sur la feuillure qu'il coiffe, avant d'être rendu solidaire de celle-ci à l'aide de l'adhésif, et afin qu'il pince fermement cette feuillure, le profilé aura de préférence une section transversale en forme de Ω, c'est-à-dire avec une base tournant une face convexe vers l'extérieur et dont la dimension transversale entre les ailes est supérieure à l'écartement des parties les plus proches de ces ailes, lesquelles s'écartent en outre l'une de l'autre à partir de ces parties en direction de leur bord libre.

L'invention a également pour objet un procédé de fixation sur une feuillure du profilé à section en U défini ci-dessus, caractérisé en ce que l'on coiffe cette feuillure à l'aide du profilé et en ce que l'on fait passer pendant une durée suffisante un courant électrique dans le ou les conducteurs dont est équipé ce profilé, en vue de chauffer l'adhésif qu'il comporte et de le laisser ensuite refroidir, pour le rendre ainsi solidaire de la feuillure.

Du fait de l'absence d'armature, le profilé peut épouser étroitement la forme de la feuillure qu'il équipe, ce qui constitue un avantage appréciable dans le cas d'une feuillure ou d'un bord saillant d'un encadrement d'ouverture d'une carrosserie d'automobile, car cette feuillure peut présenter des variations notables d'épaisseur, que compense aussi l'adhésif lorsqu'il est chauffé.

Par ailleurs, du fait de l'utilisation d'un adhésif pour solidariser la feuillure et le profilé, celui-ci est fixé de façon beaucoup plus fiable sur la feuillure, ce qui améliore l'étanchéité du profilé.

D'autres caractéristiques et avantages de l'invention apparaîtront dans la description détaillée qui va suivre de trois formes de réalisation de ce profilé. Dans cette description, on se réfèrera aux dessins annexés sur lesquels :
La figure 1 est une coupe transversale d'un premier profilé conforme à l'invention ;
La figure 2 est une coupe transversale d'un second profilé, représenté en position d'utilisation sur une feuillure ;
La figure 3 est une vue analogue à la figure 2 d'un troisième profilé conforme à l'invention.

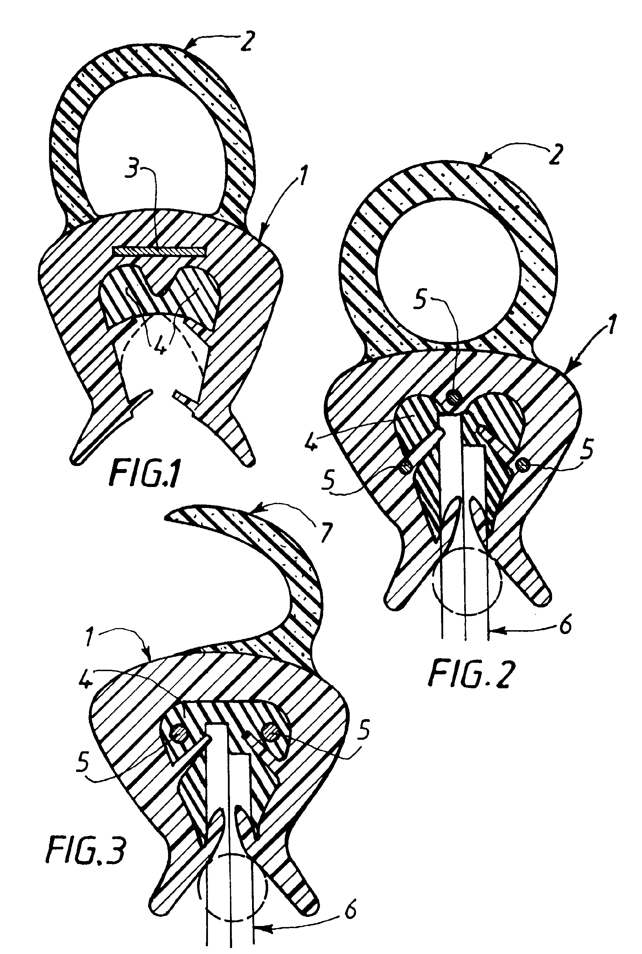

Le profilé représenté sur la figure 1 comprend une partie formant pince, destinée à coiffer une feuillure et à la base de laquelle est attenant à l'extérieur un organe tubulaire d'étanchéité 2. La partie 1 formant pince est, par exemple, en caoutchouc du type E.P.D.M. et l'organe tubulaire 2 en caoutchouc cellulaire. L'organe tubulaire 2 pourrait également être attenant extérieurement à une aile latérale de la partie 1 formant pince. A la place d'un organe tubulaire, le profilé pourrait aussi être équipé d'un autre organe d'étanchéité, par exemple d'une lèvre souple.

Conformément à l'invention, la partie 1 formant pince est dépourvue d'armature métallique en U noyée dans le caoutchouc la constituant, mais présente une section transversale en Ω, c'est-à-dire avec une base présentant une surface convexe tournée vers l'extérieur et dont la dimension transversale entre les ailes du profilé est supérieure à l'écartement des parties les plus proches de ces ailes, celles-ci s'écartant en outre l'une de l'autre à partir de ces parties rapprochées en direction de leurs bords libres. Il est ainsi possible de maintenir en position le profilé sur la feuillure qu'il est destiné à équiper et de lui faire pincer fermement cette feuillure, malgré l'absence d'armature, avant de l'en rendre solidaire par collage.

Afin de procéder à cette opération de collage, la partie 1 formant pince comporte, noyée dans sa base, une résistance électrique, constituée ici par un feuillard métallique 3, apte à être connecté à ses deux extrémités à une source de courant électrique, tandis qu'un ou des cordons 4 d'adhésif solide, par exemple du type "hot melt", gainent la face interne de la base de la partie 1 et/ou la partie contiguë de l'une ou des deux parois latérales de cette partie 1.

Après mise en place de la partie 1 à section en Ω sur une feuillure, il suffit de raccorder les extrémités du feuillard 3 à une source de courant électrique et d'y faire circuler le courant pour chauffer les cordons 4 d'adhésif et provoquer la fusion de celui-ci. L'adhésif ramolli flue alors, comme représenté par des lignes interrompues sur la figure 1, et remplit les espaces séparant la tranche de la feuillure du profilé, et/ou les surfaces contiguës de celle-ci, des parties correspondantes de la base et des parois latérales et il suffit ensuite d'interrompre l'alimentation électrique pour que l'adhésif se resolidifie et assemble rigidement la feuillure et la partie formant pince qui la coiffe.

Alternativement, l'adhésif pourrait être du type mastic-colle et être alors à l'état pâteux, lorsque le profilé est mis en place sur une feuillure. Dans ce cas, la chaleur engendrée par le passage du courant électrique dans le feuillard 3 provoque la polymérisation et le durcissement de l'adhésif, qui rend ainsi rigidement solidaires le profilé et la feuillure.

Le feuillard 3 pourrait naturellement être remplacé par un ou des fils métalliques 5, noyés dans la base et/ou dans les parois latérales de la partie 1 à section en Ω, comme on le voit sur la figure 2, où les organes déjà décrits sont désignés par les mêmes chiffres de référence et sur laquelle on a également reporté la feuillure 6 que coiffe la partie 1, avant fusion de l'adhésif 4.

Alternativement, comme représenté sur la figure 3, où les organes déjà décrits sont également désignés par les mêmes chiffres de référence, les fils métalliques 5 constituant ici les conducteurs électriques peuvent être noyés dans la masse même de l'adhésif 4.

On notera, que dans cette dernière réalisation, l'organe d'étanchéité n'est plus un profilé tubulaire, mais une simple lèvre souple 7, par exemple en élastomère.

Dans toutes ces réalisations, le profilé 1 dépourvu d'armature peut épouser fidèlement le profil de la feuillure 6, en compensant les variations d'épaisseur de celle-ci, avec l'assistance de l'adhésif, qui lors de sa fusion, remplit les intervalles séparant la partie 1 de la feuillure 5.

L'absence d'armature rigide découpée dans le profilé 1 à section en Ω se traduit par d'autres avantages importants, à savoir l'allègement du profilé et l'absence de déformations de la surface des parois latérales dues à cette armature.

En effet, celle-ci comprend habituellement des lamelles disposées à des intervalles réguliers dans les deux ailes latérales de la partie 1 et leur présence entraîne à la surface de ces parois des successions de parties ondulées et en creux, que l'on désigne dans la technique par le terme imagé de "côtes de cheval".

Sur celle des parois qui est visible de l'extérieur, ces déformations de surface produisent un aspect désagréable au regard et l'on a cherché depuis longtemps, mais sans grand succès, à supprimer ou à minimiser ces déformations.

Dans le profilé à section en Ω de la présente invention, qui ne comporte pas d'armature et, par conséquent, pas de lamelles noyées dans les parties correspondant aux branches du Ω, celles-ci présentent une surface externe parfaitement unie, du plus bel effet, sans qu'il soit nécessaire d'utiliser des artifices dans ce but.

## Revendications

1. Profilé à section en U, à la base ou à une aile latérale duquel est éventuellement attenant un organe d'étanchéité (2, 7), ce profilé (1) étant destiné à coiffer une feuillure (6) et à en être rendu solidaire, ce profil étant caractérisé en ce qu'il est dépourvu d'une armature rigide à section en U, en ce qu'au moins un cordon continu d'un matériau adhésif (4) rapporté à l'intérieur du profilé (1) adhère à la surface interne de la base de celui-ci et/ou éventuellement d'au moins une de ses ailes latérales, et en ce que, dans l'élastomère ou le plastomère constituant le profilé ou dans le cordon de matériau adhésif est noyé au moins un conducteur électrique (3, 5) apte à être connecté à ses extrémités à une source de courant électrique en vue de chauffer le matériau adhésif.

2. Profilé selon la revendication 1, caractérisé en ce que le matériau adhésif (4) est une colle apte à se ramollir sous l'effet de la chaleur produite par le passage d'un courant électrique dans le ou les conducteurs (3, 5).

3. Profilé selon la revendication 1, caractérisé en ce que le matériau adhésif (4) est une colle-mastic pâteuse apte à durcir par polymérisation sous l'effet de la chaleur produite par le passage d'un courant électrique dans le ou les conducteurs (3, 5).

4. Profilé selon l'une des revendication 1 et 3, caractérisé en ce que le conducteur électrique est un feuillard métallique (3) ou un fil métallique (5).

5. Profilé selon l'une des revendications 1 à 4, caractérise en ce qu'en coupe transversale, il présente un profil en Ω.

6. Procédé de fixation sur une feuillure (6) d'un profilé selon l'une des revendications 1 à 5, caractérisé en ce que l'on coiffe cette feuillure (6) à l'aide du profilé et en ce que l'on fait passer un courant électrique pendant une durée suffisante dans le ou les conducteurs (3, 5) dont est équipé ce profilé, en vue de chauffer l'adhésif (4) qu'il comporte et de le laisser ensuite refroidir, pour le rendre ainsi solidaire de la feuillure.
